# EUROPEAN PATENT SPECIFICATION

(11) **EP 1 837 184 B1**
(45) Date of publication and mention of the grant of the patent: **15.07.2009**
(21) Application number: 06027098.0
(22) Date of filing: 29.12.2006
(51) Int. Cl.: B41J 2/175, G01F 23/68

(54) **Ink cartridge with movable member for detection of remaining ink amount**
Tintenpatrone mit beweglichem Teil zur Erkennung der verbleibenden Tintenmenge
Cartouche d'encre ayant un élément mobile pour détecter la quantité d'encre restante

(30) Priority: 24.03.2006 JP 2006082769
(43) Date of publication of application: 26.09.2007
(73) Proprietor: Brother Kogyo Kabushiki Kaisha, Mizuho-ku Nagoya 467-8561 (JP)
(72) Inventor: Sasaki, Toyonori, Nagoya-shi, Aichi 467-8562 (JP); Yamada, Makoto, Nagoya-shi, Aichi 467-8562 (JP); Ito, Takashi, Nagoya-shi, Aichi 467-8562 (JP)
(74) Representative: Materne, Jürgen

(56) References cited:
- EP-A- 0 963 848
- EP-A- 1 147 902
- JP-A- 7 314 716
- US-A1- 5 631 674

## Description

The present invention relates to an ink cartridge according to the preambles of claims 1 and 8, respectively.

### BACKGROUND ART

A known ink-jet printer can detect when the amount of ink remaining in the ink cartridge has become low. For instance, as described in JP H7-314716A, a known ink cartridge includes a float (float component) which floats on the ink within the ink cartridge, and a known ink-jet printer includes an optical remaining ink detection sensor (optical sensor) on the bottom side of the ink cartridge. By detecting the presence of the float on the bottom side of the ink cartridge using this remaining ink detection sensor, it is possible to detect whether the remaining ink is still sufficient or not. Specifically, when there is sufficient ink remaining within the ink cartridge, the float will be positioned higher than the remaining ink detection sensor, and the light of the remaining ink detection sensor will not be blocked by the float. If the ink within the ink cartridge is used and the amount of remaining ink falls, the float will fall downwards, and once the light from the remaining ink detection sensor is blocked by the float, it will detect that there is little ink remaining within the ink cartridge.

On the other hand, there are types of ink cartridges which are installed into the ink-jet recording apparatus from the horizontal direction. This type of ink cartridge has an ink supply outlet for supplying ink externally, which is positioned on the front surface of the ink cartridge in the insertion direction of the ink cartridge into the ink-jet recording apparatus. An ink supply path is provided in the ink cartridge and connected to the ink supply outlet. The ink supply path is connected to the ink-jet printer by the insertion operation of the ink cartridge from the horizontal direction. The ink supply path extends in parallel to the insertion direction. For instance, the ink cartridge in JP2003-025608A includes a flow outlet (ink supply path) formed on the front surface of the ink vessel (ink cartridge) in the insertion direction. The flow outlet is connected to the flow inlet of the ink-jet recording apparatus, and this flow outlet extends in the insertion direction of the ink vessel. This type of ink cartridge can be installed from the horizontal direction into the ink-jet recording apparatus. Therefore, there is no need to provide access from the upper side of the ink-jet recording apparatus when replacing the cartridge. Therefore, it is possible to effectively use the space on the upper side of the ink-jet recording apparatus, and it is possible to overlay devices vertically.

After studying the above-described remaining ink detection construction in this type of horizontally installed ink cartridge, the inventors of the present invention discovered that it is possible to reduce the size of the ink-jet recording apparatus by configuring the ink-jet printer and the ink cartridge such that the presence of the float is detected on the front surface side of the ink cartridge in the insertion direction in which the ink supply path is formed. The reason for this is that it is possible to position the needle to extract the ink from the ink supply path and the remaining ink detection sensor close to each other.

However, in this type of configuration, because the float and ink supply path are positioned in a row vertically, there are problems. If the ink supply path is positioned above the remaining ink detection sensor, it will become impossible to supply ink before the float is detected by the sensor because the surface of the ink falls below the ink supply path before the float is detected. Therefore, the remaining ink detection sensor must be positioned above the ink supply path. However in this case, because, as the ink is reduced and the float falls, the float may interfere with the ink supply path, the float must be detected by the sensor above the ink supply path. Therefore, when the float is detected, quite a large amount of ink will still remain in the ink cartridge.

### Disclosure of the invention

The object of the present invention is to provide an ink cartridge that can be installed from the horizontal direction into an ink-jet recording apparatus, that enables the detection of when the amount of ink remaining inside an ink cartridge has fallen and that enables reduction of the size of the ink-jet recording apparatus.

This object is solved by an ink cartridge as defined in the independent claims 1 and 8 respectively.

According to the ink cartridge of claim 1, when there is a large amount of ink remaining in the ink chamber, the moveable member may be positioned above the ink supply portion. Therefore, when the moveable member is in this position, the moveable member may block the light from an optical sensor. Then the moveable member may move downwards along the guide according to decrease of the ink amount in the ink chamber, and it may be possible to detect that the amount of ink has become low at the point when the moveable member has moved to the state in which the moveable member does not block the light. At this time, because the moveable member moves in the direction which is slanted with respect to the predetermined direction, even if the movable member moves downwards, it will not interfere with the ink supply portion.

According to the ink cartridge of claim 8, when there is a large amount of ink remaining in the ink chamber, the moveable member may be positioned above the ink supply portion. Therefore, when the moveable member is in this position, the moveable member may block the light from an optical sensor. Then the moveable member may move downwards guided by the protrusion according to decrease of the ink amount in the ink chamber, and it may be possible to detect that the amount of ink has become low at the point when the moveable member has moved to the state in which the moveable member does not block the light. At this time, because the moveable member moves in the direction which is slanted with respect to the predetermined direction, even if the movable member moves downwards, it will not interfere with the ink supply portion.

### BRIEF DESCRIPTION OF THE DRAWINGS

FIGURE 1 is a perspective view of an ink cartridge according to an example of the embodiment of the present invention.
FIGURE 2 is an exploded perspective view of Figure 1.
FIGURE 3 is a side view of the ink reservoir unit in Figure 2.
FIGURE 4 is a diagram of the area of the float component when seen from the IV direction of Figure 3.
FIGURE 5 is a diagram of the area of the float component when seen from the V direction of Figure 3.
FIGURE 6 is a partial enlarged diagram of Figure 3.
FIGURE 7 is a diagram showing the method of installing the ink cartridge of Figure 1 into the ink-jet recording apparatus.
FIGURE 8 is a side view of the equivalent to Figure 3 of modified example 1.
FIGURE 9 is a side view of the equivalent to Figure 3 of modified example 2.
FIGURE 10 is a diagram of the equivalent to Figure 4 of modified example 2.
FIGURE 11 is a diagram of the equivalent to Figure 5 of modified example 2.
Figure 12 is a side view of the equivalent to Figure 3 of modified example 3 when an ink amount in an ink chamber is greater than a predetermined amount.
Figure 13 is a side view of the equivalent to Figure 3 of modified example 3 when an ink amount in an ink chamber is less than a predetermined amount.
Figure 14 is a side view of the equivalent to Figure 3 of modified example 4 when an ink amount in an ink chamber is greater than a predetermined amount.
Figure 15 is a side view of the equivalent to Figure 3 of modified example 4 when an ink amount in an ink chamber is less than a predetermined amount.
Figure 16 is a diagram of the equivalent to Figure 4 of modified example 4.
Figure 17 is a diagram of the equivalent to Figure 5 of modified example 4.
Figure 18 is a side view of the equivalent to Figure 3 of modified example 5 when an ink amount in a ink chamber is greater than a predetermined amount.
Figure 19 is a side view of the equivalent to Figure 3 of modified example 5 when an ink amount in an ink chamber is less than a predetermined amount.
Figure 20 is a diagram of the equivalent to Figure 4 of modified example 5.
Figure 21 is a diagram of the equivalent to Figure 5 of modified example 5.

### EMBODIMENTS

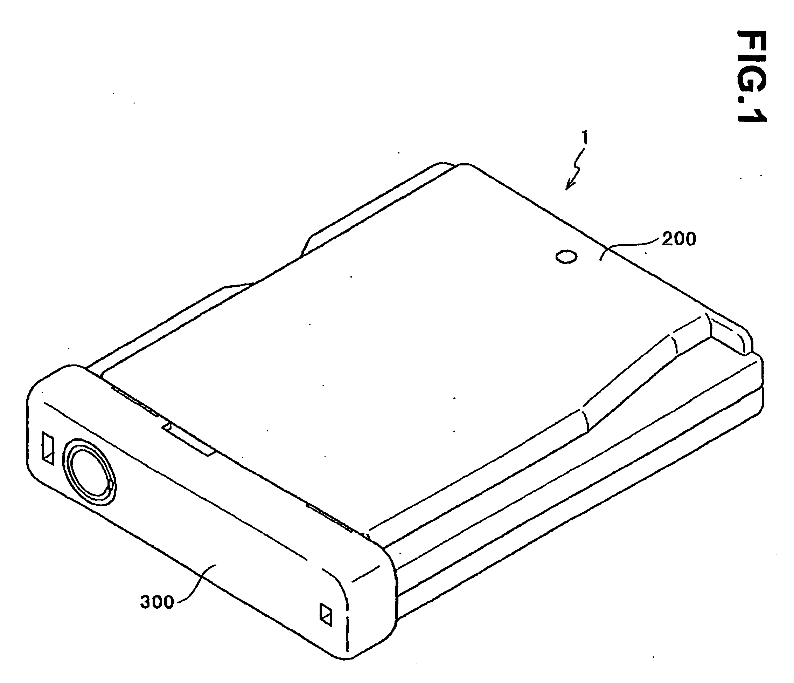

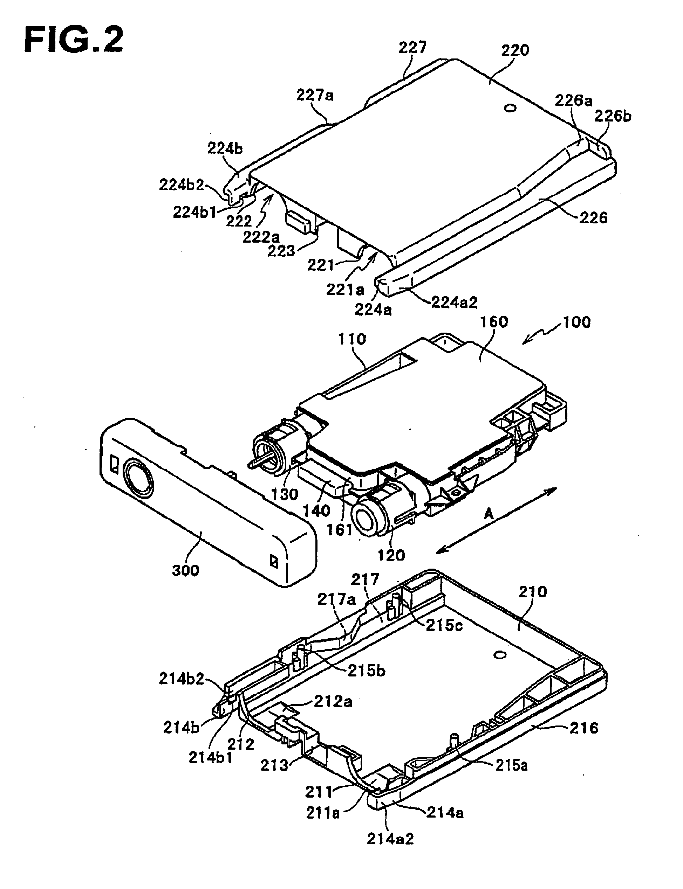

Below, embodiments of the present invention will be described while referring to the drawings. Figure 1 is a perspective view showing the outside of an ink cartridge 1 according to an embodiment of the present invention. Figure 2 is an exploded perspective view of Figure 1. In Figure 2, the side wall 160, which will be discussed later, is translucent, and while the inside of the ink reservoir 100, which will be discussed later, can be seen, we will omit the designation of this.

As shown in Figures 1 and 2, the ink cartridge 1 is composed of an ink reservoir 100 to store the light-permeable ink, an external case 200 to cover the entirety of the ink reservoir 100, and a protector 300 which is attached to the external case 200 to protect the ink reservoir 100 when transporting the ink cartridge 1. In the present embodiment, the ink reservoir 100, external case 200 and protector 300 are formed of a resin material such as nylon, polyethylene or polypropylene.

The external case 200 is constructed of two case components 210 and 220 which sandwich the ink reservoir 100 above and below (top and bottom in Figure 2), where the first case component 210 is a component to cover the ink reservoir 100 in the lower side of Figure 2, and the second case component 220 is a component to cover the ink reservoir 100 in the upper side of Figure 2. The first and second case component 210 and 220 are constructed of a resin material, and are manufactured through injection molding.

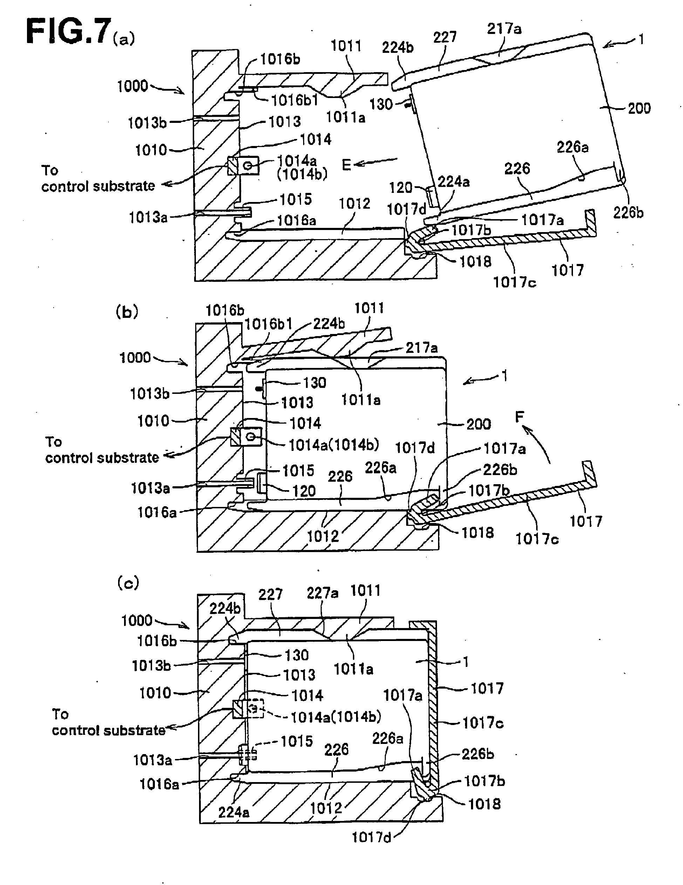

In the first case component 210, there are two case cut-out parts 211 and 212 in order to expose an ink supply part 120 and an air intake part 130 to the outside of the outer case 200. The case cut-out parts 211 and 212 are formed in half-circle shapes, where the case cut-out part 211 at the right front side of Figure 2 is a cut-out corresponding to the ink supply part 120, and the case cut-out part 212 at the left front side of Figure 2 is a cut-out corresponding to the air intake part 130. Also, between the case cut-out part 211 and the case cut-out part 212, there is a case cut-out part 213 formed which is cut in a rectangular shape, and this is a cut-out for insertion of the optical sensor 1014 (see Figure 7) to a position to sandwich a protrusion part 140. Also, on the inner side surface that is connected with the case cut-out part 211 of the first case component 210, there is a contact groove 211a that is in contact with ink supply part 120, and on the inner side surface that is connected with the case cut-out part 212 of the first case component 210, there is a contact groove 212a that is in contact with the air intake part 130. By using these contact grooves 211a and 212a, it is easy to align the first case component 210 of the ink reservoir 100.

Also, in the first case component 210, there are two case protrusion parts 214a and 214b that protrude toward the protector 300 (to the left front direction in Figure 2) from the surface on which the case cut-out parts 211-213 are formed. The case protrusion parts 214a and 214b are formed on both ends (the right front side end of Figure 2 and the left front side end of Figure 2) of the first case component 210 such that the case cut-out parts 211-213 are positioned between them, and the one on the ink supply part 120 side (right front side of Figure 2) is the case protrusion part 214a, and the one of the air intake part 130 side (left back side of Figure 2) is the case protrusion part 214b. Also, the case protrusion part 214a has a sloped surface 214a2 that is sloped toward the case cut-out parts 211-213 (the first case component 210 inner side direction) from the part that is connected to the side wall of the first case component 210 to the edge of the case protrusion part 214a (to the protector 300 direction, to the left front direction in Figure 2). When installing the ink cartridge 1 into a printer 1000 (see Figure 7), the installation will be made with the case protrusion part 214a will be on the lower side. Therefore, when installing the ink cartridge 1, if the sloped surface 214a2 is in contact with the lower part of the printer 1000, when the ink cartridge 1 will be smoothly induced into a certain attachment position with the help of the result of the slope.

Further, in the case protrusion part 214b, there is a case protrusion cut-out part 214b1 that is cut in a rectangular shape and which is formed on the inner side surface of the case protrusion part 214b, which is on the case cut-out part 211-213 side. In addition, in the case protrusion part 214b, there is a case mating groove 214b2 that can mate with a mating rod 1016b1 (see Figure 7) when the ink cartridge 1 is installed into the printer 1000.

Also, in the first case component 210, there is a rod component 215a to perform alignment of the ink reservoir 100 which is enclosed within the outer case 200 and which protrudes toward the second case component 220 near the side wall of the first case component 210 on the ink supply part 120 side (right front side of Figure 2), and there are rod components 215b and 215c formed to perform alignment of the ink reservoir 100, which are enclosed within the outer case 200 and which protrude toward the second case component 220 (to the upper side of Figure 2) near the side wall of the first case component 210 on the air intake part 130 side (left front side of Figure 2). Due to the fact that alignment of the ink reservoir 100 can be performed by the three locations of these rod components 215a-215c, it is possible to prevent the ink reservoir 100 from being attached to the outer case in a wrong orientation.

Within the second case component 220, as in the first case component 210, not only are there three case cut-out parts 221-223, there is a contact groove 221a that is connected to the case cut-out part 221 and a contact groove 222a that is connected to the case cut-out part 222. Also, on the inner side of the case cut-out parts 221-223, there are case protrusion parts 224a and 224b, the case protrusion part 224a has a sloped surface 224a2 which is sloped toward the case cut-out part 221-223 from the part that is connected to the side surface of the second case component 220 to the edge of the case protrusion part 224a. Further, in the case protrusion part 224b, there is a case protrusion cut-out part 224b1 with the same construction as the case protrusion cut-out part 214b1, and a case mating groove 224b2 formed that extends over the side surface of the second case component 220 from the edge of the case protrusion part 224b. Also, within the second case component 220, there is a mating hole part (not shown) having a hole for mating the rod components 215a-215c which opens towards the first case component 210 side (lower side of Figure 2) corresponding to the positions in which the rod components 215a-215c of the first case component 210 were formed.

Next, the outer shape of the external case 200 will be described. The first and second case components 210 and 220 are formed in a concave shape at both side surfaces in the direction that intersects the longitudinal direction A (the direction connecting the right back side of Figure 2 and the left front side of Figure 2, as indicated by A in Figure 2), and at the both side surfaces, there is a step formed with relation to the surface of the first and second case components 210 and 220. In this stepped part, the first and second case components 210 and 220 are attached, and the ink reservoir 110 is fixed in relation to the external case 200. The stepped part of the ink supply part 120 side (right front side of Figure 2) is a first case attachment part 216 and 226, and the stepped part of the air intake part 130 side (left back side of Figure 2) is a second case attachment part 217 and 227.

In the following, the longitudinal direction A of the first and second case component 210 and 220 is called as the longitudinal direction of the ink cartridge 1, the longitudinal direction of the ink reservoir 100, and the longitudinal direction of the external case 200.

The first and second case attachment parts 226 and 227 of the second case component 220 will be described. The first case attachment part 226 is not only connected to the same planar surface as the case protrusion part 224a, there is also a concave part 226a which is formed in a concave shape in the inner direction of the second case component 220 on the opposite side of the first case attachment part 226 from the case protrusion part 224a, and an engaging part 226b that engages with a mating component 1017 (see Figure 7) when the ink cartridge 1 is installed into the printer 1000 (see Figure 7). The concave part 226a is a domain in order to confirm the range of moving of the mating part 1017. The second case attachment part 227 has a locking part 227a, which is formed in a concave shape at a central position in the longitudinal direction of the second case component 220, and this locking part 227a is a part to lock the ink cartridge 1 when it is in the state of installation into the printer 1000 (see Figure 7).

While a detailed description will be omitted, within the first case component 210, there is also a concave part, an engaging part and a locking part 217a formed in the same shape as the concave part 226a, the engaging part 226b and the locking part 227a of the second case component 220 though not shown in the figure.

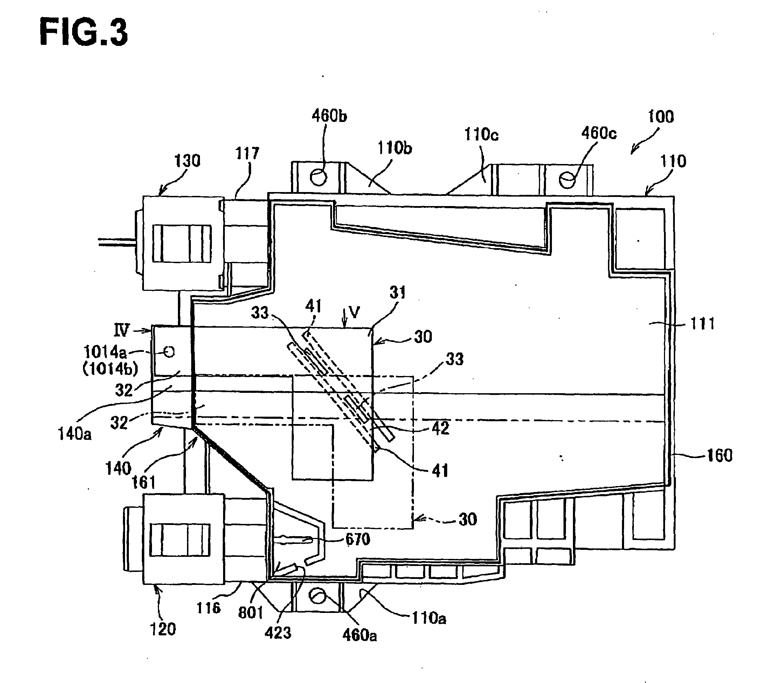

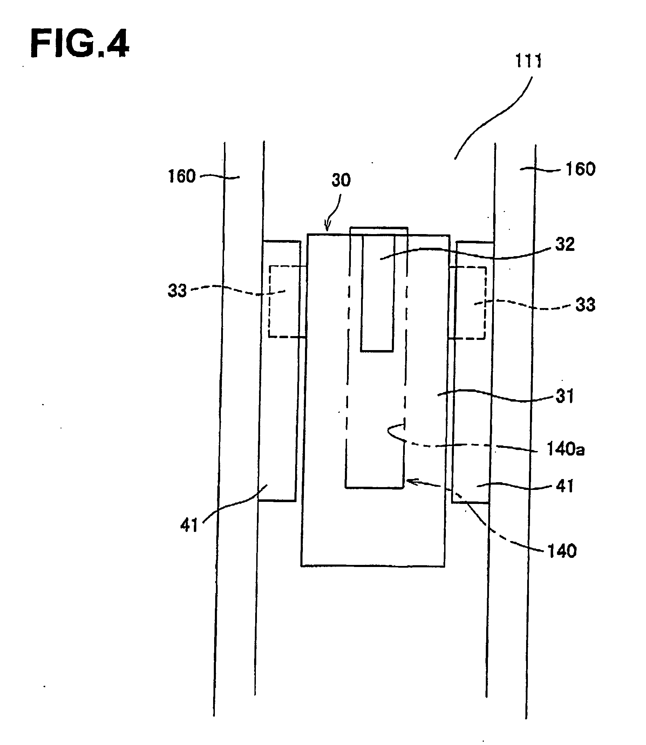

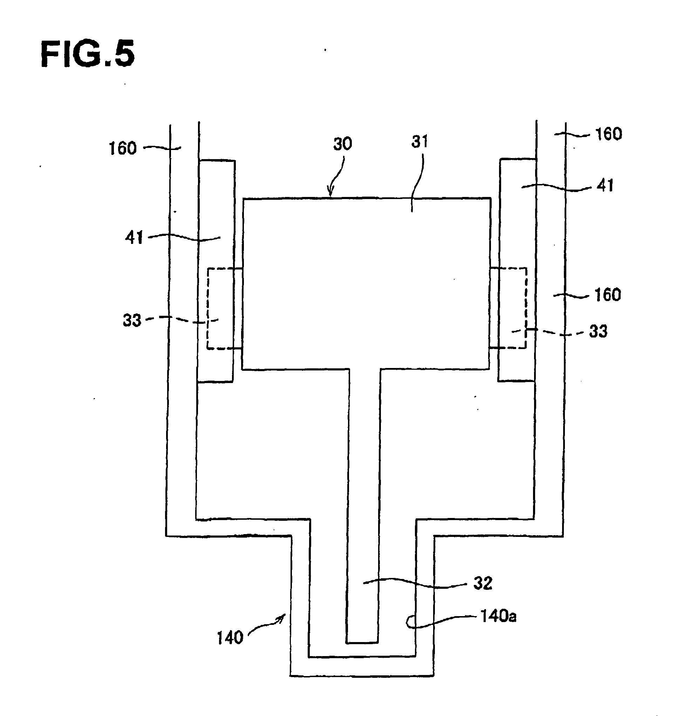

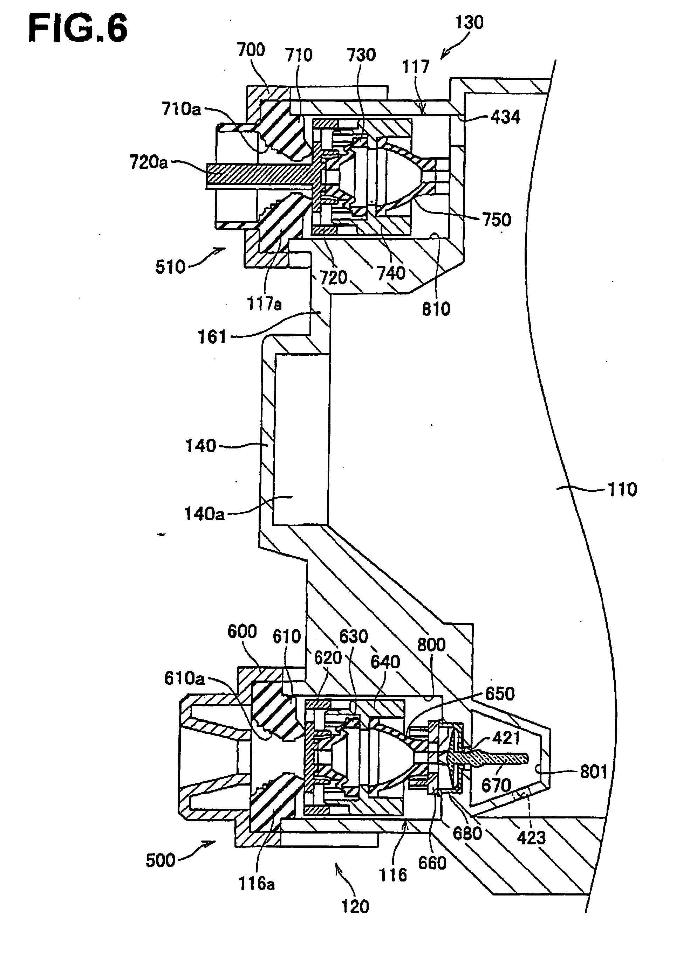

Next, while referring to Figures 3-6, the ink reservoir 100 will be described. Figure 3 is a side view of the ink reservoir 100 in Figure 2. Figure 4 is a diagram of the vicinity of a float component 30 when viewing Figure 3 from the direction of IV. Figure 5 is a diagram of the vicinity of the float component 30 when viewing Figure 3 from the direction of V. Figure 6 is a cross-sectional diagram of the central part in the direction perpendicular to the plane of Figure3 in the area of the left edge part of the ink reservoir 100 in Figure 3. The state of the ink reservoir 100 shown in Figure 3 is the state in which the ink cartridge 1 is installed into the printer 1000 (see Figure 7) (installation state). In other words, this is the state in which the ink supply part 120, the air intake part 130, and the protrusion part 140 are positioned on the side surface, where the ink supply part 120 is positioned on the bottom side, and the air intake part 130 is positioned on the top side. Also, in Figure 3, in addition to showing the outside boundary of the side wall 160 in bold line, the position of a light emitting part 1014a and light blocking part 1014b when the ink cartridge 1 is installed into the printer 1000 is shown by the dashed line. Also, in Figure 6, the designations of the float component 30 and a guide 41, which will be discussed later, have been omitted.

As shown in Figure 3, the ink reservoir 100 is formed of an ink reservoir chamber 111, an ink supply path 116, and etc, which will be discussed later, within a rectangular shaped case 110. Also, on the lower surface of the case 110, there is a single attachment part 110a which extends downwards, and on the upper surface of the case 110, there are two attachment parts 110b and 110c which extend upwards, where the attachment parts 110a-110c have through-holes 460a-460c which mate with rod components 512a-512c, respectively. Further, by mating the through-holes 460a-460c with the rod components 512a-512c respectively, it is possible to align the ink reservoir 100 into the external case 200.

Inside the case 110, the ink reservoir chamber 111 occupies approximately the entire region excluding the ink supply path 116, an air intake path 117 and the protrusion part 140, which will all be described later. Within the ink reservoir chamber 111, the ink is stored where this ink has light-permeability properties and this ink is supplied to the printer 1000 from the ink supply path 116.

The protrusion part 140 protrudes leftwards in the central part in the vertical direction of a side wall (one side wall) 161 on the left side of the ink reservoir chamber 111. Inside the protrusion part 140, there is an internal cavity 140a that communicates with the ink reservoir chamber 111. The protrusion part 140 is formed to be positioned between the light emitting part 1014a and the light receiving part 1014b that form the optical sensor 1014, which will be discussed later, where these are placed respectively on the front side and back side of Figure 3 when the ink cartridge 1 is installed into the printer 1000. The protrusion part 140 has light-permeability properties, and when the light emitted from the light emitting part 1014a is not blocked by a light blocking part 32, which will be discussed later, it will reach the light receiving part 1014b.

Inside the ink reservoir chamber 111, as shown in Figure 3-5, there is the float component 30 which floats on the ink within the ink reservoir chamber 111 and which has a mass per unit volume which is smaller than that of the ink within the ink reservoir 111. The float component 30 has a rectangular-shaped float part 31. Air is present within the float part 31. The float part 31 also has a light blocking part 32, which protrudes from the left side surface of the float part 31 in Figure 3. The float part 31 has a length in the horizontal direction of Figures 4 and 5, which is longer than that of the internal cavity 140a of the protrusion part 140. As a result, the float part 31 is prevented from entering the protrusion part 140. The light blocking part 32 has a length in the horizontal direction of Figure 4 and Figure 5 that is shorter than that of the internal cavity 140a of the protrusion part 140, making it possible to it to enter the internal cavity 140a. Further, when the light blocking part 32 is positioned within the internal cavity, it will block the light that is emitted from the light emitting part 1014a and which passes through the protrusion part 140 (in other words, the light blocking part 32 has light-blocking properties). Further, the float component 30 comprises two protrusions 33 formed on the two parallel side surfaces of the float part 31. The protrusions 33 extend towards the side walls 160 of the case 110 respectively in the perpendicular direction to the paper surface in Figure 3. Also, the two protrusions 33 are placed in positions which overlap each other in the perpendicular direction to the paper surface in Figure 3, and as each of the two protrusions 33 get closer to the ink supply path 116 in the vertical direction, they extend away from an ink outlet 116a of the ink supply path 116 in the horizontal direction. In other words, they extend obliquely downwards and to the right of Figure 3. Each of the two protrusions 33 extends in one direction.

On each of the inner side surfaces of the two (pair of) side walls 160 that mutually face each other in case 110, there are two guides 41 formed. Each guide 41 extends in parallel to the protrusions 33 downwards and to the right of Figure 3 from a position above one edge part of the ink supply path 116. A guide path 42 is formed in the region sandwiched between these two guides 41. As was the case with the protrusion 33, the guide path 42 extends to back away from the ink outlet 116a of the ink supply path 116 in the horizontal direction as it approaches the ink supply path 116 in the vertical direction. The guide path 42 extends in one direction. The protrusion 33 is placed to be sandwiched by these two guides 41. In other words, the protrusion 33 engages with the guides 41 such that it can slide in the guide path 42. Further, as the ink within the ink reservoir chamber 111 is gradually reduced, the float component 30 will track the height of the ink surface within the ink reservoir chamber 111 as the protrusion 33 slides along the guide path 42. As a result, the float component 30 will move (displace) in a direction that is parallel to the guide path 42. In other words, when there is a large amount of remaining ink within the ink reservoir chamber 111, the float component 30 will be positioned vertically above the ink supply path 116, which will be discussed later (the position shown by the solid line in Figure 3), but as the ink is reduced, it will fall to approximately the same height as the ink supply path 116 (the position shown by the double-broken line in Figure 3). At this time, the float component 30 will be positioned away from the ink outlet 116a of the ink supply path 116 in the horizontal direction in comparison to when there is a large amount of ink remaining. Therefore, float component 30 does not interfere with the ink supply path 116. Also, because the protrusion 33 extends in parallel to the guide path 42, by bringing the protrusion 33 into contact with the guide 41, it is possible to prevent rotation when the float component 30 moves.

As shown in Figure 6, below the protrusion part 140 of the side wall 161, there is the ink supply path 116, and above the protrusion part 140 of the side wall 161, there is the air intake path 117. In the state in Figure 6 (installation state), the ink supply path 116 and air intake path 117 extend in the horizontal direction, where inside the ink supply path 116, there is a valve mechanism 500 which can open and close an ink outlet 116a of the ink supply path 116, and inside the air intake path 117, there is an air intake mechanism 510 that can open and close the air intake inlet 117a of the air intake path 117. Further, the ink supply part 120 is constructed of the ink supply path 116 and the valve mechanism 500, and the air intake part 130 is constructed of the air intake path 117 and the air intake mechanism 510.

The ink supply path 116 is, as shown in Figure 6, constructed of a valve storage part 800 and a ink supply chamber 801. The valve storage part 800 stores a part of the valve mechanism 500. The ink supply chamber 801 communicates with the valve storage part via a connection hole 421 and communicates with the ink reservoir chamber 111 via a connection hole 423. A path from the ink supply chamber 801 to the ink outlet 116a via the connection hole 421 and the valve storage part 800 extends, in its entirety, in the horizontal direction. In the ink supply path 116, the ink within the ink reservoir chamber 111 will flow within the ink supply chamber 801 via the connection hole 423, and further, it will flow to the valve storage part 800 via the connection hole 421.

The valve mechanism 500 will be described in more detail. As shown in Figure 6, the valve mechanism 500 comprises a supply cap 600, a supply joint 610, a supply valve 620, a first supply spring 630, a supply slider 640, a second supply spring 650, a valve seat 660, a check valve 670, and a cover 680.

The supply joint 610 is attached in the vicinity of the ink outlet 116a of the ink supply path 116. The supply joint 610 is constructed from a resin material having elasticity such as rubber. There is a through-hole 610a which extends in the horizontal direction in the central area of the supply joint 610 into which an ink extraction pipe 1015 (see Figure 7) of the printer 1000 (see Figure 7) is to be inserted. The supply joint 610 covers the surrounding area of the ink outlet 116a of the ink supply path 116. When the ink cartridge 1 is not installed into the printer 1000, the supply valve 620 will be pressed to the left side of the figure by the first supply spring 630, the left side wall surface of the supply valve 620 is in contact with the right edge of the supply joint 610 within the figure, and as a result, the through-hole 610a is closed. On the other hand, if the ink cartridge 1 is installed into the printer 1000, the supply joint 610 will move to the right side of the figure as it is pressed by the ink extraction pipe 1015, which will be discussed later, and because there will be a spacing created between supply valve 620 and supply valve 620, the ink supply path 116 (valve storage part 800) and the ink extraction pipe 1015 will communicate, making it possible to supply the ink to the printer 1000 (ink-jet head). By doing this, it is possible to perform opening and closing of the ink outlet 116a of the ink supply path 116.

The first supply spring 630 and the second spring 650 sandwich the supply slider 640. The supply slider 640 not only covers the right side of the supply valve 620, it can also operate in the movement direction (left/right direction of Figure 6) of the supply valve 620 which is pressed by the ink extraction pipe 1015. The second supply spring 650 is formed in the same material and same shape as the first supply spring 630 and is stored within the supply slider 640, and it presses the supply slider 640 leftwards. The valve seat 660 is not only in contact with the second supply spring 650, it also supports the check valve 670. The check valve 670 is placed near the connection hole 421, preventing back-flow of the ink in the connection hole 421. The cover 680 covers the check valve 670 between it and the valve seat 660.

The air intake path 117 extends in the horizontal direction, and it has an air intake mechanism storage part 810 which stores a part of the air intake mechanism 510, and a connection hole 434 which communicates the air intake mechanism storage part 810 and the ink reservoir chamber 111.

The air intake mechanism 510 will be described in detail. The air intake mechanism 510 is, as shown in Figure 4, composed of an air cap 700, an air joint 710, an air valve 720, a first air spring 730, an air slider 740 and a second air spring 750.

The air cap 700 is attached to an air intake inlet 117a of the air intake unit 117. The air joint 710 is constructed of a resin material having elasticity such as rubber, and not only is there a through-hole 710a that extends in the horizontal direction in the central part, it also covers the surrounding area of the air intake inlet 117a. When the ink cartridge 1 is not installed into the printer 1000, the supply valve 720 is pressed leftwards in the figure by the first supply spring 730, and the left side wall surface of the supply valve 720 will be in contact with the right edge part of the air joint 710 in the figure, and as a result, the through-hole 710a will be closed. On the other hand, if the ink cartridge 1 is installed into the printer 1000, a protrusion part 720a which protrudes on the outer side of the ink intake inlet 117a from the left edge of the air valve 720 will be pressed through contact with an attachment surface 1013 (see Figure 7), which will be explained later, and it will move to the right side in the figure, and because a space will be created between the air joint 710 and the air valve 720, the air intake path 117 and the air intake path 1013b, which will be discussed later, will communicate, enabling intake of air. In this way, it is possible to open and close the air intake inlet 117a of the air intake path 117.

The first air spring 730 and the second air spring 750 sandwiches the air slider 740. The air slider 740 covers the right side of the air valve 720 and also can operate in the movement direction (the left/right direction of Figure 6) of the air valve 720, which is pressed through contact with the wall surface of the attachment surface 1013. The second air spring 750 is formed of the same material and in the same shape as the first air spring 730 and it is stored within the air slider 740, pressing the air slider 740 leftwards.

Next, while referring to Figure 7, the installation method of the ink cartridge 1 into the printer 1000 will be described. Figure 7 is a figure that shows how the ink cartridge 1 is installed into the printer 1000.

Before explaining the method to install the ink cartridge 1 into the printer 1000, we will first explain the attachment parts for the ink cartridge 1 in the printer 1000.

As shown in Figure 7(a), an attachment part 1010 of the printer 1000 comprises a locking rod 1011 which protrudes in the perpendicular direction (the right-side direction in Figure 7) from the attachment part 1010 of the ink cartridge 1, and which locks the locking parts 217a and 227a of the external case 200. The attachment part 1010 further comprises a support part 1012 which not only supports the first case attachment parts 216 and 226 of the external case 200 from below, but which also is formed in a concave shape corresponding to the shape of the first attachment parts 216 and 226. There is a convex part 1011a on the locking rod 1011 which protrudes to the side of the support part 1012 and which is formed in the same shape as the locking parts 217a and 227a.

On the attachment surface 1013 of the attachment part 1010, there is an optical sensor 1014. The optical sensor 1014 is formed in a U-shape, where the edge on one side which is opened in the U-shape (front side of Figure 5) is the light emitting part 1014a which emits light, and the edge on the other side (back side of Figure 5) is the light receiving part 1014b which receives the light. The light emitting part 1014a and light receiving part 1014b protrude from the attachment surface 1013 such that they can be inserted into the through-holes formed by the case cut-out parts 213 and 223 and the protrusion part 140. When the light emitted from the light emitting part 1014a is received by the light receiving part 1014b, the optical sensor will output a signal to the control substrate (not shown) in the printer 1000, and when the light emitted from the light emitting part 1014a is blocked, and the light receiving part 1014b cannot receive this light, no signal will be output to the control substrate. Then, when this signal is not output to the control substrate, it will be possible to print, and when this signal is output to the control substrate, a warning to change the ink cartridge will be made to the user by a display means that is not shown on the figure.

Also, the ink extraction pipe 1015 protrudes from the side of the attachment surface 1013 (lower side of Figure 7(a)) corresponding to the ink supply part 120, and on the side of the attachment surface 1013 (upper side of Figure 7(a)) corresponding to the air intake part 130, the attachment surface 1013 is formed as a planar surface. As shown in Figure 7, the ink extraction pipe 1015 is positioned below the optical sensor 1014. An ink path 1013a is connected to the ink extraction pipe 1015, and the ink is supplied to the printer 1000 via the ink path 1013a. Also, there is an air intake path 1013b formed on the attachment surface 1013 of the air intake part 130 side, and air is taken into the ink reservoir chamber 111 via the air intake path 1013b.

Also, the case protrusion parts 214a and 224a as well as the case protrusion parts 214b and 224b are gently inserted into both ends of the attachment surface 1013 (both ends of the attachment surface 1013 between the locking rod 1011 and support part 1012 in Figure 7(a)), and the concave parts 1016a and 1016b are formed at the both ends corresponding to the outer shape of the case protrusion parts 214a and 224a and case protrusion parts 214b and 224b. Further, there is the mating rod 1016b1 formed on the concave part 1016b which is inserted into and mates with the mating groove which is formed between the case mating grooves 214b2 and 224b2 of the external case 200. When the ink cartridge 1 is installed, the mating rod 1016b1 will be inserted into the mating groove formed by the case mating grooves 214b2 and 224b2. In other words, not only is the shape of the case protrusion part formed by the case protrusion parts 214a and 224a of the external case 200 different from that of the case protrusion part formed by the case protrusion parts 214b and 224b, because the shapes of the concave parts 1016a and 1016b of the printer 1000 are also different, when the ink cartridge 1 is installed upside-down, the mating rod 1016b1 will become an obstacle and the ink cartridge 1 cannot be installed. Therefore, because mistaken installation of the ink cartridge 1 is prevented, it is possible to prevent any damage to the ink supply part 120 or to the air intake part 130, as well as to prevent any damage to the optical sensor 1014 or to the ink extraction pipe 1015.

Further, within the attachment part 1010, on the edge side of the support part 1012 (the left side of Figure 7(a), the edge of the ink cartridge 1 side), there is a engaging component 1017 that can rotate, comes into inside the concave part 226a and engage with the engaging part 226b of the external case 200. The engaging component 1017 comprises a engaging edge 1017a which engages with the locking part 226b of the external case 200, an axis part 1017b which acts as the axis of the rotation of the engaging component 1017 and which is connected to the engaging edge 1017a, and a covering part 1017c which covers the opposite side surface of the external case from the surface that faces the attachment part 1010and which is connected to the axis part 1017b. There is a convex part 1017d formed on the axis part 1017b which protrudes in the circumferential direction, and through locking of this convex part 1017d into a concave part 1018 which is formed on the attachment part 1010 of the printer 1000, the engaging component 1017 can be fixed.

As shown in Figure 7(a), when the ink cartridge 1 (in the state in which the protector 300 has been removed) is installed into the printer 1000, the ink cartridge 1 will be installed such that the ink supply part 120 is on the lower side and the air intake part 130 is on the upper side. This is because, if the ink supply part 120 is not positioned on the lower side, it will not be possible to effectively use the ink within the ink cartridge 1 (ink reservoir chamber 111).

Also, when the ink cartridge 1 is installed into the printer 1000, the ink supply part 120, the protrusion part 140 and the air intake part 130 will be in this order, from the bottom to the top, and further, the ink supply part 120, the protrusion part 140, and the air intake part 130 are formed on the same edge surface. Therefore, because the ink supply part 120, the protrusion part 140, and the air intake part 130 are constructed to be positioned on the same edge surface close to each other, it is possible to position the optical sensor 1014, the ink extraction pipe 1015 (ink path 1013a) and the air intake path 1013b, all of which are required on the printer 1000 side, on the same surface close to each other. Therefore, it is possible to reduce the size of the printer 1000.

Installation of the ink cartridge 1 is performed by inserting the case protrusion parts 214a and 224a (first case attachment parts 216 and 226) of the external case 200 such that they are in contact with the support part 1012, and pushing the ink cartridge 1 such that the first case attachment parts 216 and 226 will slide across the top of the support part 1012. In other words, as shown in Figure 7(a), the ink cartridge 1 will slide in the direction of the arrow E. As described above, because the sloped surfaces 214a2 and 224a2 are formed on the case protrusions 214a and 224a, it is possible to smoothly insert the ink cartridge 1 onto the support part 1012 with the help of the sloped surfaces 214a2 and 224a2.

As shown in Figure 7(b), when the ink cartridge 1 is pushed toward the attachment part 1010 (to the left side of Figure 7(b)), the locking rod 1011 will be pressed by the second case attachment parts 217 and 227, and it will elastically deform in the direction away from the support part 1012. Also, the engaging edge part 1017a of the engaging component 1017 will fit within the concave part 226a of the external case 200, and then, these will be in contact with the engaging part 226b. Further, when inserting the ink cartridge 1, the engaging component 1017 will rotate upwards (direction F in Figure 7(b)).

As shown in Figure 7(c), when the ink cartridge 1 is inserted even further from the state in Figure 7(b) (or when the locking component 1017 is rotated in the arrow F direction in Figure 7(b) by the user), the convex part 1011a of the locking rod 1011 will mate into and lock with the locking parts 217a and 227a of the external case 200, fixing the ink cartridge 1. Also, the convex part 1017d of the engaging component 1017 will engage with the concave part 1018, fixing the ink cartridge 1. Therefore, when the ink cartridge 1 is installed into the attachment part 1010, it is possible to prevent easy dislodging of the ink cartridge 1 due to vibrations from printing, etc.

Also, because movement of the ink cartridge 1 in the vertical direction can be restricted by the locking rod 1011 and support part 1012, it is possible to prevent damage to the optical sensor 1014 or ink extraction pipe 1015 due to insertion of the ink cartridge 1 at an angle.

Also, when the ink cartridge 1 is installed into the attachment part 1010, the ink extraction pipe 1015 will be inserted inside the ink supply part 120, and as described above, it will be possible to perform supply of ink, and as the protrusion part 720a of the air valve 720 of the air intake part 130 comes into contact with the attachment surface 1013, it will be possible to have air intake, as described above, and when the optical sensor 1014 is inserted into the through-hole formed by the case cut-out parts 213 and 223 and the protrusion part 140, as described above, it will be possible to perform detection of the amount of ink remaining.

Also, when the ink cartridge 1 is installed into the attachment part 1010, the optical sensor 1014 will be inserted into the through-hole formed by the case cut-out parts 213 and 223 and the protrusion part 140, so the light emitting part 1014a and light receiving part 1014b of the optical sensor 1014 will be positioned within the external case 200. Therefore, not only will it be possible to reduce any damage to the optical sensor 1014, it will also be possible to reduce any mistaken detection due to dust or debris on the light emitting part 1014a or the light receiving part 1014b.

Returning to Figure 3, it will be described how to detect that the amount of remaining ink has been reduced when the ink cartridge 1 has been installed into the printer 1000.

When there is sufficient ink remaining within the ink reservoir chamber 111, the float component 30 will float on the surface of the ink within the ink reservoir chamber 111 due to buoyancy. However, as the top edge of the light blocking part 32 comes into contact with the upper surface of the protrusion part 140 bounding the top part of the internal cavity 140a, the float component 30 will not move any higher than the position shown by the solid line in Figure 3, and the protrusion 33 will be positioned near the upper edge of the guide path 42. At this time, the edge part of the light blocking part 32 will be positioned in the internal cavity 140a of the protrusion part 140, and as the light emitted by the light emitting part 1014a is blocked by the light blocking part 32, the light receiving part 1014a will receive no light. Therefore, the optical sensor 1014 will not output a signal to the control substrate that is not shown, and printing in the printer 1000 will be permitted.

As the ink within the ink reservoir chamber 111 is consumed, the surface of the ink within the ink reservoir chamber 111 will fall, and tracking along with this, as shown by the double-dotted line in Figure 3, the float component 30 will fall downwards and to the right in Figure 3 in parallel to the guide path 42. As this happens, the light blocking part 32 will no longer be able to block the light emitted from the light emitting part 1014a, and the light receiving part 1014b will receive this light. At this time, a signal will be output from the optical sensor 1014 to the control substrate, and a warning to change the ink cartridge will be done.

According to the above described embodiment, the ink reservoir chamber 111 and the ink supply path 116 are formed within the rectangular case 110, and above the ink outlet 116a on the side wall 161 of the case 110, a protrusion part 140 is formed. The protrusion part 140 has light-permeability properties. The internal cavity 140a is formed in the protrusion part 140. The internal cavity 140a communicates with the ink reservoir chamber 111. When the protrusion 33 is positioned near the upper edge of the guide path 42, the light blocking part 32 will be positioned in the internal cavity 140a of the protrusion part 140, float component 30 will block the light emitted by the light emitting part 1014a. As the ink within the ink reservoir chamber 111 is reduced, because the float component 30 will move downwards along the guide path 42, as the status changes from one in which the light emitted by the light emitting part 1014a is blocked by float component 30 to a state in which this light is not blocked, once the float component 30 has moved, a signal will be output to the control substrate, and it will be possible to detect that the amount of remaining ink has become low.

Also, when there is a large amount of ink remaining, the float component 30 will be positioned above the ink supply path 116, but because the guide path 42 is sloped such that it backs away from the ink outlet 116a of the ink supply path 116 in the horizontal direction as it approaches the ink supply path 116 in the vertical direction, as the amount of remaining ink falls, even if the float component 30 moves downwards, there will be no interference with the ink supply path 116, and there will be no obstruction of the movement of the float component 30. Therefore, when the float component 30 has fallen to approximately the same height as the ink supply path 116, the light blocking part 32 will not block the light emitted form the light emitting part 1014a, then it will be possible to detect that the ink has been reduced when the amount of ink remaining has actually fallen.

Also, because the valve mechanism 500 is stored within the ink supply path 116, when the ink cartridge 1 is installed into the printer 1000, the ink will be supplied, and when the ink cartridge 1 is removed from the printer 1000, it is possible to prevent any leakage of the ink.

Next, modified examples of embodiment will be described to which various modifications have been added to the present invention. However, the same reference numerals will be used for those items, which have the same structure as in the present invention, and the description of these will be omitted.

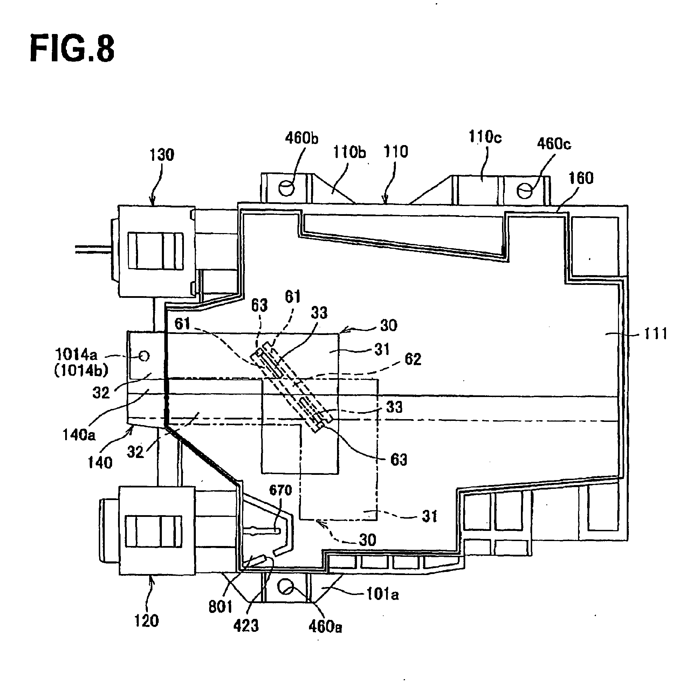

In a first modified example, as shown in Figure 8, stoppers 63 are formed near each edge of a lower side guide 61 and extend towards a guide path 62 (modified example 1). In this case, when there is sufficient ink remaining within the ink reservoir chamber 111, and when the float component 30 tries to float due to buoyancy, as shown by the solid line in Figure 8, the upper edge of the light blocking part 32 will not only come into contact with the upper surface of the protrusion part 140 bounding the top part of the internal cavity 140a, but the top edge of the protrusion 33 is also in contact with the stopper 63 formed on the upper side. This prevents the float component 30 from moving any further upwards. On the other hand, when the float component 30 has fallen downwards as the ink within the ink reservoir chamber 111 has been reduced, as shown by the double-dotted line in Figure 8, the lower edge of the protrusion 33 will come into contact with the stopper 63 formed on the lower side. This prevents the float component 30 from moving any further downwards. By setting up the stoppers 63 in this way, it is possible to prevent the protrusion 33 from falling out of the guide path 62 (dislodging from the guide path 62). Therefore, it is possible to shorten the length of the guide 61. In modified example 1, there were two stoppers 63 formed on the lower guide 61, but the two stoppers 63 can also be formed on the upper guide 61. Also, it is acceptable to form one of the two stoppers 63 on the upper guide 61 and form the other on lower guide 61. In this case, it is acceptable to form the stoppers 63 and the upper and lower guides 61 as separate units, or it is acceptable to form the stoppers 63 and the upper and lower guides 61 as a single unit.

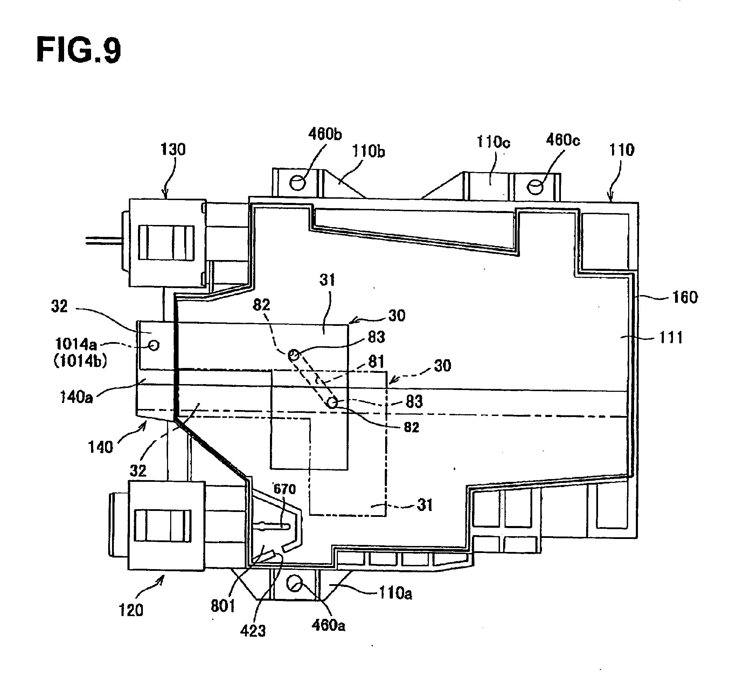

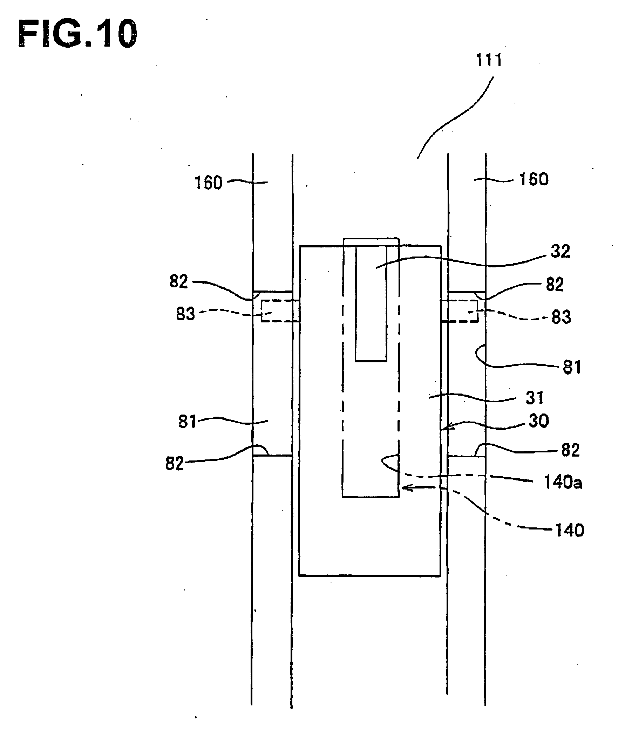

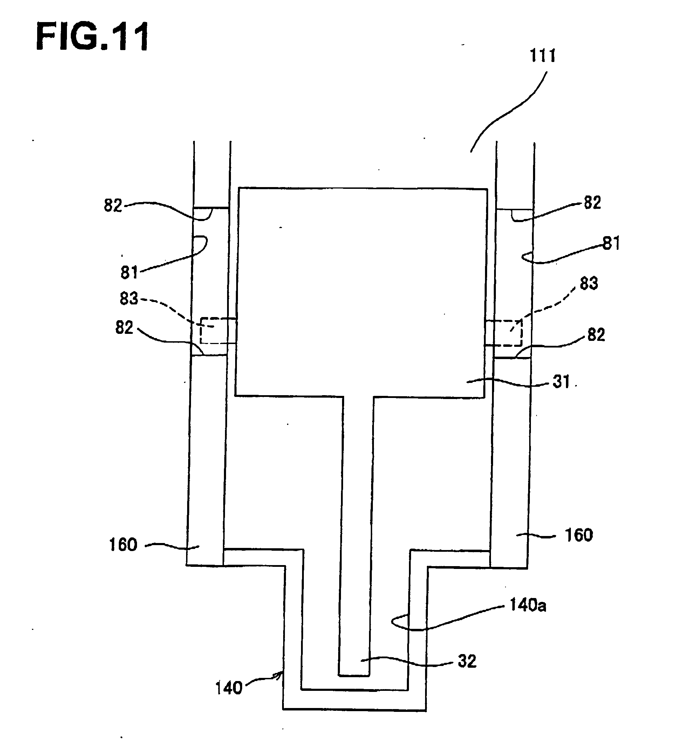

In a second modified example, as shown in Figures 9-11, a round, pillar-shaped protrusion 83 is formed on each of the two parallel side surfaces. The protrusions 83 extend towards the side walls 160 of the case 110 respectively in the perpendicular direction to the paper in Figure 9, and on each of the two side walls 160 of the case 110, there is a guide groove (guide path) 81 which extends such that it backs away from the ink outlet 116a of the ink supply path 116 in the horizontal direction as it approaches the ink supply path 116 in the vertical direction or in other words, extends downwards and to the right of Figure 9 (modified example 2). The guide groove 81 extends in one direction. The guide grooves 81 overlap each other in the perpendicular direction of the paper in Figure 9, Then, the protrusions 83 will slidably fit within the guide grooves 81 respectively. As the protrusion 83 slides along the guide groove 81, the float component 30 will move in a direction parallel to the guide groove 81. Therefore, it is possible to operate the float component 30 in this case in the similar manner as in the above-described embodiments. Also, in this case, side surfaces 82 of the upper edge part and lower edge part of the guide groove 81 perform the role of the stopper, and by bringing the protrusion 83 into contact with the wall surface 82, it is possible to prevent dislodging of the protrusion 83 from the guide groove 81. In the modified example 2, while the protrusion 83 is constructed in a round, pillar shape, as was the case with the protrusion 33 in the present example of embodiment, it is acceptable to form the protrusion to extend in parallel to the guide groove 83.

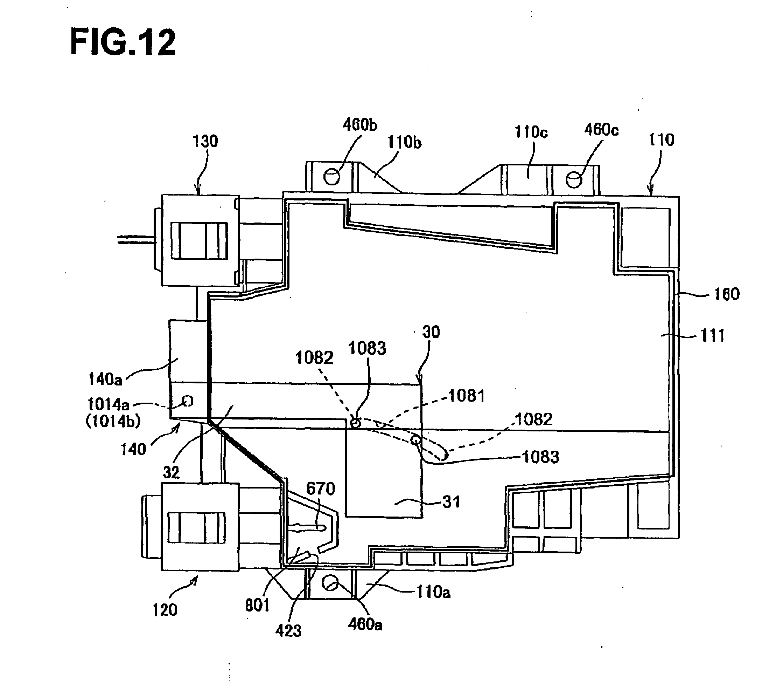

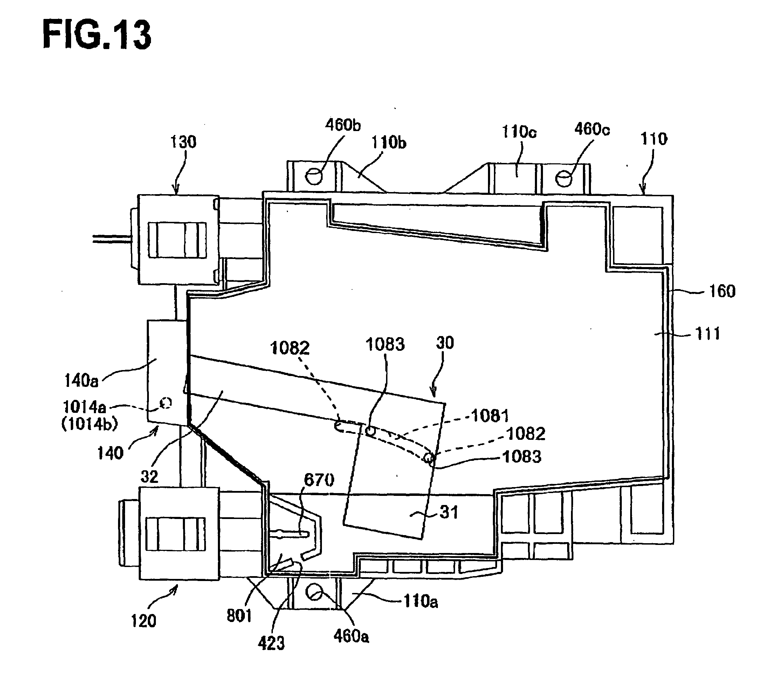

Figures 12 and 13 depict third modification. In this embodiment, two round, pillar-shaped protrusions 1083 are formed on each of the two parallel side surfaces of the float component 30. Protrusions 1083 extend towards the side walls 160 of the case 110 respectively in the perpendicular direction to the paper in Figures 12 and 13. A guide groove 1081 is formed in each of the two side walls 160 of the case 110. The guide grooves 1081 are curved. The guide grooves 1081 overlap each other in the perpendicular direction of the paper in Figures 12 and 13. The protrusions 1083 are fitted within the corresponding guide grooves 1081, such that the protrusions 1083 slide within guide grooves 1081. In this modification, side surfaces 1082 of upper edge portion and lower edge portion of guide groove 1081 perform the role of the stopper, and by contacting the protrusion 1083 with the side surface 1082, it is possible to prevent dislodging of the protrusion 1083 from the guide groove 1081. Because the guide grooves 1081 are curved, when the float component moves, a trajectory of the float component 30 is also curved. As the ink amount in ink chamber 111 decreases, the light blocking part 32 moves out from the internal cavity 140a of the protrusion part formed as a translucent portion 140 and moves upward as depicted in Figures 12 and 13.

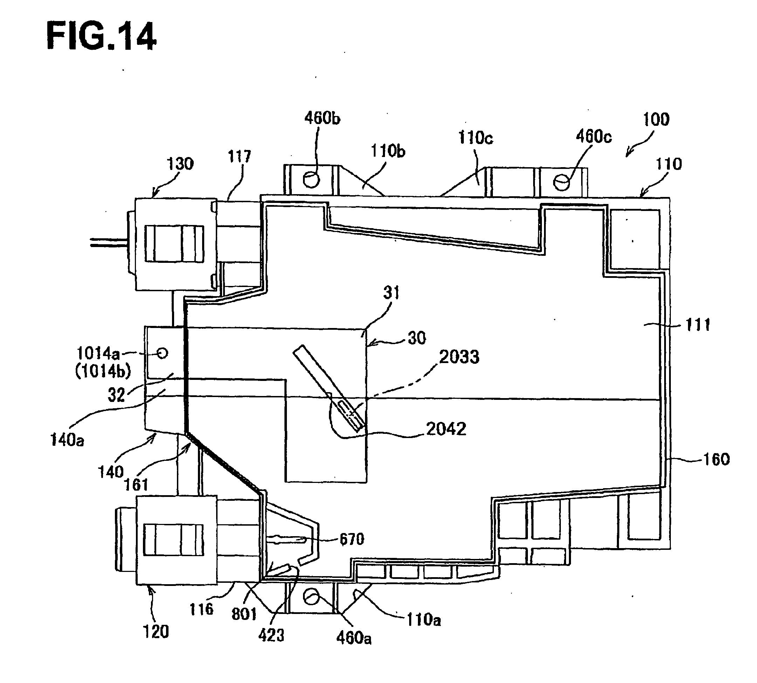

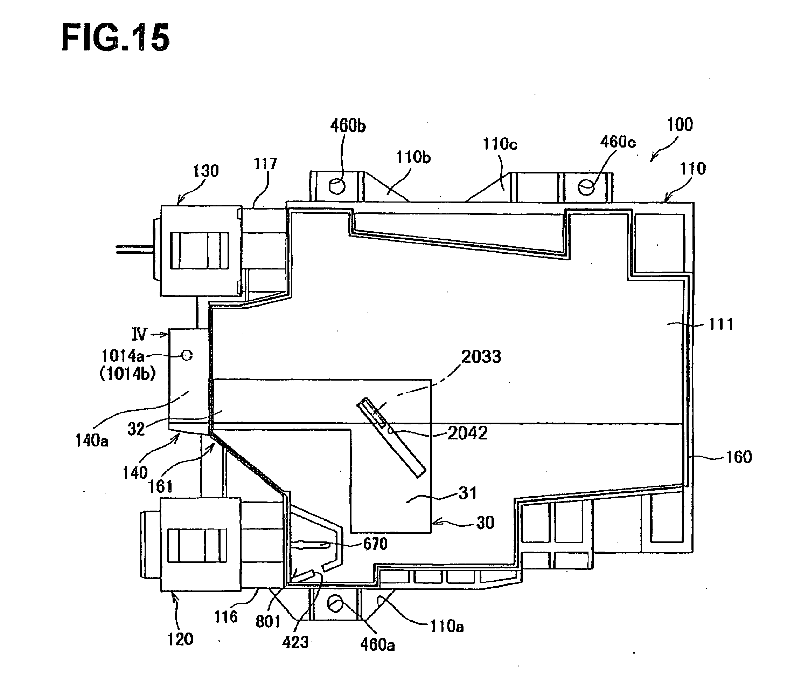

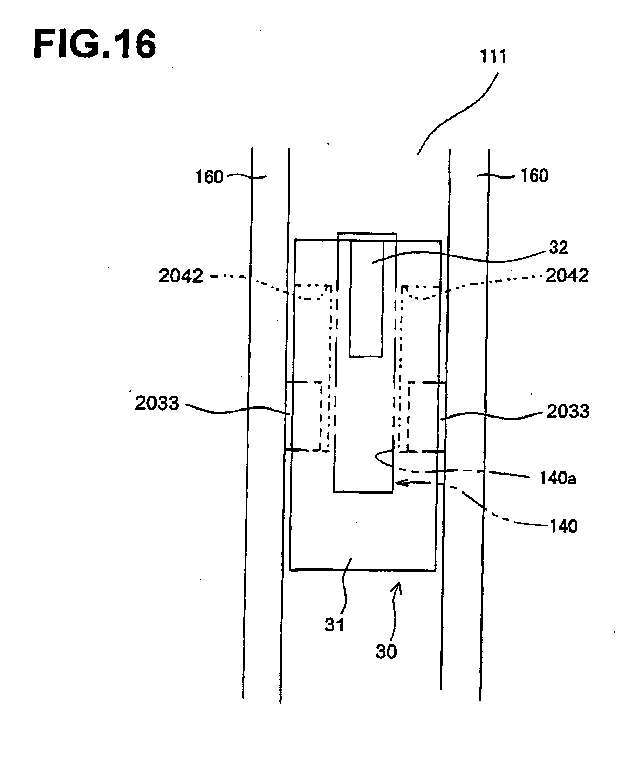

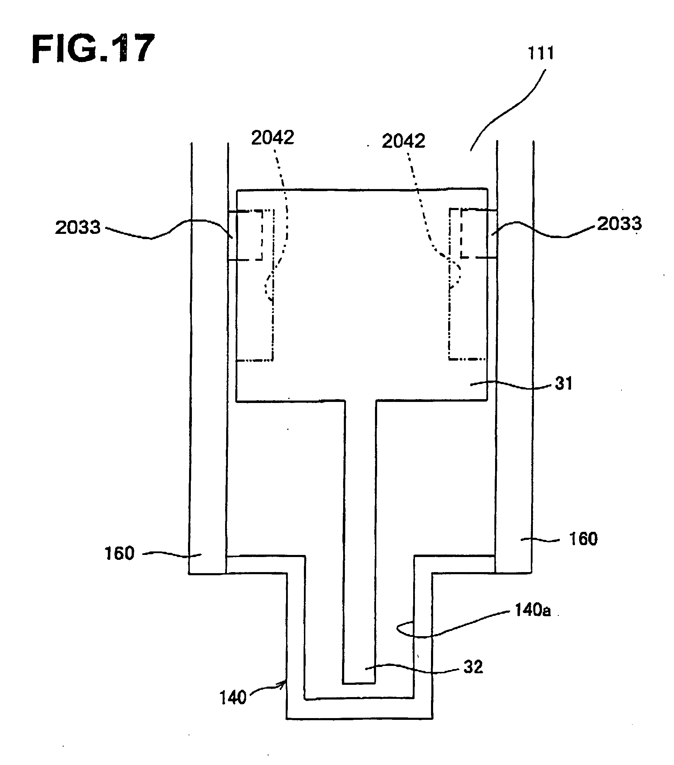

Figures 14-17 depict fourth modification. In this embodiment, a groove 2042 is formed in each of the two parallel side surfaces of float component 30. On each of the two side walls 160 of case 110, a protrusion 2033 is formed. The protrusions 2033 extend towards the grooves 2042 respectively in the perpendicular direction to the paper in Figures 14 and 15. The protrusions 2033 overlap each other in the perpendicular direction of the paper in Figures 14 and 15. The protrusions 2033 are fitted within the corresponding grooves 2042, such that the protrusions 2033 slide within the grooves 2042. The grooves 2042 and the protrusions 2033 extend in one direction, downwards and to the right of Figures 14 and 15. When the ink amount in ink chamber 111 is greater than a predetermined amount, the protrusions 2033 contact lower edges of the grooves 2042 as depicted in Figure 14. As the ink is consumed, the float component 30 moves downwards and to the right of Figures 14 and 15 and finally, the protrusions 2033 contact upper edges of the grooves 2042 as depicted in Figure 15.

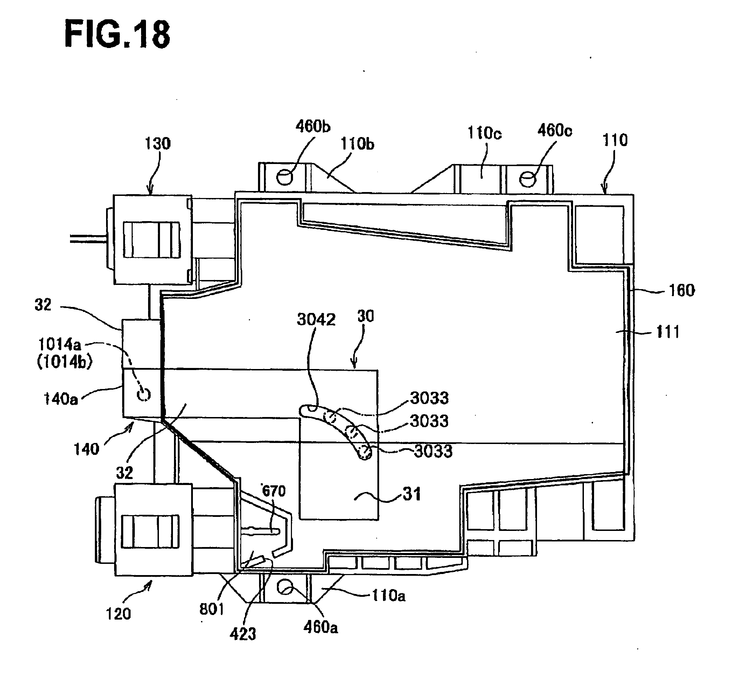

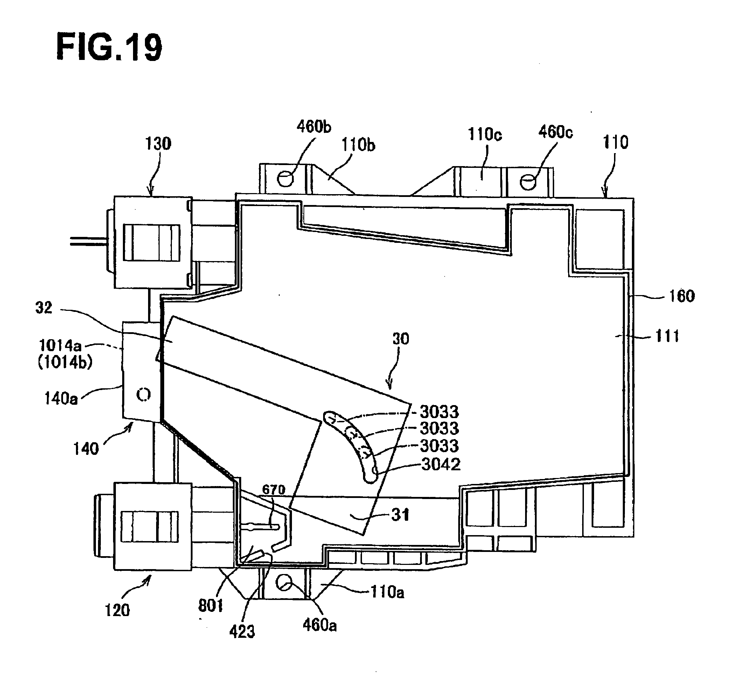

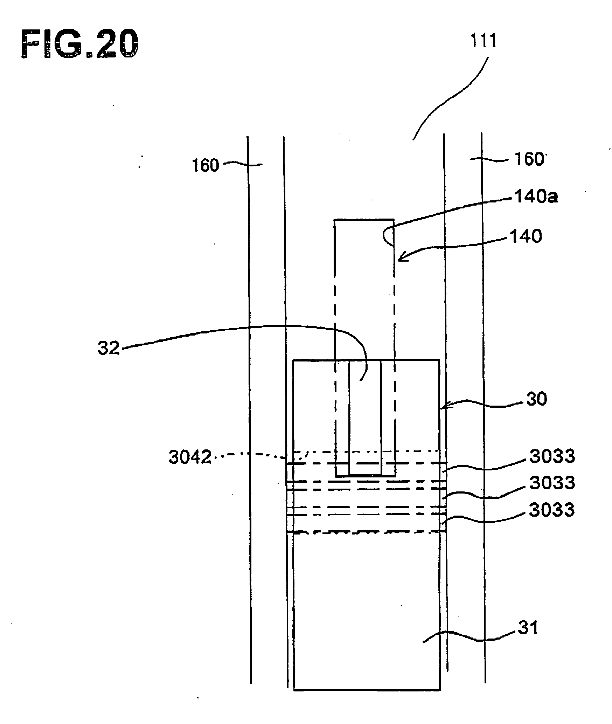

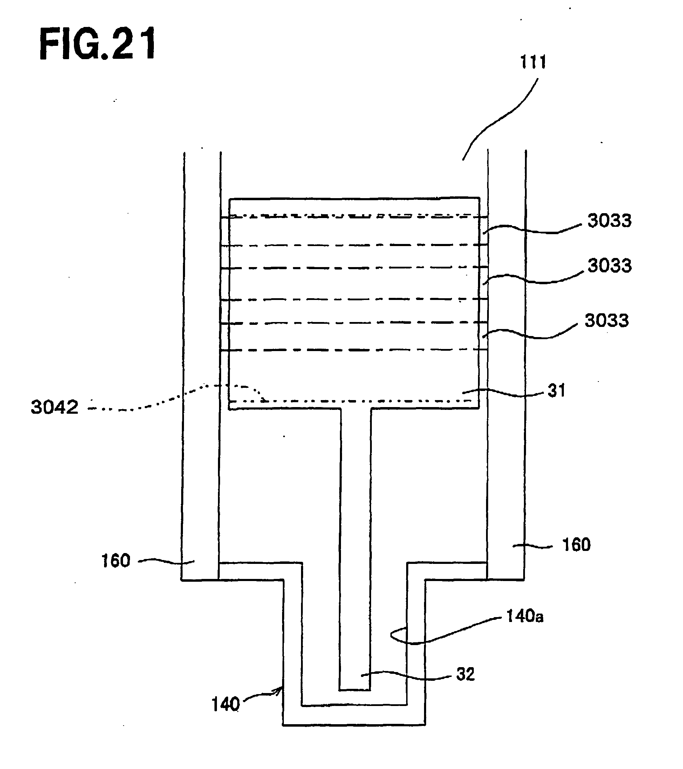

Figures 18-21 depict fifth modification. In this embodiment, a hole 3042 is formed through the float component 30. The hole 3042 extends from one of the two parallel side surfaces of the float component 30 to the other one of the two parallel side surfaces of the float component 30. Three protrusions 3033 extends from one of the two side walls 160 of the case 110 to the other one of the two side walls 160 of the case 110 through the hole 3042 in the perpendicular direction to the paper in Figures 18 and 19. The protrusions 3033 are fitted within the hole 3042, such that the protrusions 3033 slide within the hole 3042. The hole 3042 is curved as depicted in Figures 18 and 19. In other words, the protrusions 3033 are arranged on a curved line. Because the hole 3042 is curved, when the float component 30 moves, a trajectory of the float component 30 is also curved. As the ink amount in the ink chamber 111 decreases, the light blocking part 32 moves out from the internal cavity 140a of the protrusion part formed as a translucent portion 140 and moves upward as depicted in Figures 18 and 19.

In all of the embodiments described above, every portion of the movable member changes its position when the movable member moves. In other words, no portion of the movable member stayed in a fixed position as ink is consumed.

## Claims

1. An ink cartridge (1), comprising:
an ink chamber (111) comprising a wall (161) having a first end and a second end opposite the first end;
a translucent portion (140) protruding from the wall (161), wherein the translucent portion (140) has an internal cavity (140a) formed therein and the internal cavity (140a) is configured to be in fluid communication with the ink chamber (111);
an ink supply part (120) having an opening (610a) formed therethrough, wherein the ink supply part (120) is positioned at the wall (161) adjacent to the second end of the wall, and the translucent portion (140) is positioned between the first end of the wall (161) and the ink supply part (120);
a movable member (30) comprising:
a light blocking part (32); and
a float part (31) disposed within the ink chamber (111); and
wherein the movable member (30) is configured to move between a first position and a second position based at least on an amount of ink disposed within the ink chamber (111), wherein the light blocking part (32) is disposed within the internal cavity (140a) of the translucent portion (140) when the movable member (30) is positioned in the first position, wherein as the ink within the ink chamber (111) is dispensed from the interior of the ink chamber (111) to the exterior of the ink chamber (111) a surface of the ink within the ink chamber (111) moves in a predetermined direction, **characterized in that** the ink cartridge (1) further comprises
at least one guide (41; 61; 81; 1081) and, wherein in an installation state of the ink cartridge in a printer, the wall (161) is a side wall with the first end being an upper end,
and wherein the at least one guide is constructed and positioned such that when the moveable member (30) moves from the first position to the second position, at least a portion of the moveable member (30) slides on and along the at least one guide (41; 61; 81; 1081) and the movable member (30) moves in a direction which is slanted with respect to the predetermined direction such that at least a portion of the moveable member (30) is moved away from the side wall (161) while the movable member (30) does not interfere with the ink supply part (120) as the surface of ink moves in the predetermined direction.

2. The ink cartridge of claim 1, wherein the movable member (30) comprises at least one protrusion (33) which slidably engages the at least one guide (41).

3. The ink cartridge of claim 1, wherein the moveable member (30) comprises a plurality of protrusions (33; 83; 1083) which slidably engage the at least one guide (61; 81; 1081).

4. The ink cartridge of one of claims 1 to 3, wherein the at least one guide (41; 61; 81) extends in one direction.

5. The ink cartridge of one of claims 1 to 3, wherein the at least one guide (1081) is curved.

6. The ink cartridge of one of claims 1 to 5, wherein when the movable member (30) moves from the first position to the second position, each of the float part (31) and the light blocking part (32) moves in a same direction.

7. The ink cartridge of one of claims 1 to 6, wherein when the movable member (30) moves from the first position to the second position, every portion of the movable member (30) changes its position.

8. An ink cartridge (1), comprising:
an ink chamber (111) comprising a first wall (161) having a first end and a second end opposite the first end, and a second wall (160);
a translucent portion (140) protruding from the first wall (161), wherein the translucent portion (140) has an internal cavity (140a) formed therein, and the internal cavity (140a) is configured to be in fluid communication with the ink chamber (111);
an ink supply part (120) having an opening (610a) formed therethrough; wherein the ink supply part (120) is positioned at the first wall (161) adjacent to the second end of the first wall (161), and the translucent portion (140) is positioned between the first end of the first wall (161) and the ink supply part (120);
a movable member (30) comprising:
a light blocking part (32); and
a float part (31) disposed within the ink chamber (111);
wherein the movable member (30) is configured to move between a first position and a second position based at least on an amount of ink disposed within the ink chamber (111), wherein the light blocking part (32) is disposed within the internal cavity (140a) of the translucent portion (140) when the movable member (30) is positioned in the first position, wherein as the ink within the ink chamber (111) is dispensed from the interior of the ink chamber (111) to the exterior of the ink chamber (111) a surface of the ink within the ink chamber (111) moves in a predetermined direction,
**characterized in that** one of a groove (2042) or a hole (3042) is formed in or through the movable member (30); and
at least one protrusion (2033, 3033) protrudes from an interior of the second wall (160) and slidably engages the on of the groove (2042) or the hole (3042),
and, wherein in an installation state of the ink cartridge in a printer, the first wall (161) is a side wall with the first end being an upper end,
and wherein the groove or the hole and the at least one protrusion are constructed and positioned such that when the moveable member (30) moves from the first position to the second position, the at least one protrusion (2033, 3033) slides within the one of the groove (2042) or the hole (3042) and the movable member (30) moves in a direction which is slanted with respect to the predetermined direction such that at least a portion of the movable member (30) is moved away from the side wall (161) while the movable member (30) does not interfere with the ink supply part (120) as the surface of ink moves in the predetermined direction.

9. The ink cartridge of claim 8, comprising a plurality of protrusions (3033) protruding from the interior of the second wall (160).

10. The ink cartridge of claim 9, wherein the plurality of protrusions (3033) are arranged on a curved line.

11. The ink cartridge of one of claims 8 to 10, wherein the hole (3042) is formed through the movable member (30), the ink chamber (111) further comprises a third wall (160) opposite to the second wall (160), and the at least one protrusion (3033) contacts an interior of the third wall (160).

12. The ink cartridge of one of claims 8 to 11, wherein when the movable member (30) moves from the first position to the second position, each of the float part (31) and the light blocking part (32) moves in a same direction.

13. The ink cartridge of one of claims 8 to 12, wherein when the movable member (30) moves from the first position to the second position, every portion of the movable member (30) changes its position.

## Patentansprüche

1. Tintenkartusche (1) mit:
einer Tintenkammer (111), die eine Wand (161) mit einem ersten Ende und einem zweiten Ende aufweist, das dem ersten Ende entgegengesetzt ist;
einem lichtdurchlässigen Abschnitt (140), der von der Wand (161) vorsteht, wobei der lichtdurchlässige Abschnitt (140) einen inneren Hohlraum (140a) aufweist, der darin ausgebildet ist, und der innere Hohlraum (140a) so konfiguriert ist, dass er mit der Tintenkammer (111) in einer Fluidverbindung ist;
einem Tintenzuführteil (120) mit einer Öffnung (610a), die durch ihn hindurch ausgebildet ist, wobei der Tintenzuführteil (120) an der Wand (161) angrenzend an dem zweiten Ende der Wand positioniert ist und der lichtdurchlässige Abschnitt (140) zwischen dem ersten Ende der Wand (161) und dem Tintenzuführteil (120) positioniert ist;
einem bewegbaren Element (30) mit:
einem Lichtblockierteil (32); und
einem Schwimmteil (31), der innerhalb der Tintenkammer (111) angeordnet ist; und
wobei das bewegbare Element (30) so konfiguriert ist, dass es sich zwischen einer ersten Position und einer zweiten Position zumindest auf der Grundlage einer Tintenmenge bewegt, die innerhalb der Tintenkammer (111) vorhanden ist, wobei der Lichtblockierteil (32) innerhalb des inneren Hohlraumes (140a) des lichtdurchlässigen Abschnittes (140) angeordnet ist, wenn das bewegbare Element (30) an der ersten Position positioniert ist, wobei, wenn die Tinte innerhalb der Tintenkammer (111) aus dem Inneren der Tintenkammer (111) zu der Außenseite der Tintenkammer (111) abgegeben wird, sich eine Oberfläche der Tinte innerhalb der Tintenkammer (111) in einer vorbestimmten Richtung bewegt,
**dadurch gekennzeichnet, dass** die Tintenkartusche (1) des Weiteren Folgendes aufweist:
zumindest eine Führung (41; 61; 81; 1081) und
wobei in einem Anbringungszustand der Tintenkartusche an einen Drucker die Wand (161) eine Seitenwand ist, wobei das erste Ende ein oberes Ende ist,
und wobei die zumindest eine Führung so aufgebaut und positioniert ist, dass, wenn sich das bewegbare Element (30) von der ersten Position zu der zweiten Position bewegt, zumindest ein Abschnitt des bewegbaren Elementes (30) an und entlang der zumindest einen Führung (41; 61; 81; 1081) gleitet und sich das bewegbare Element (30) in einer Richtung bewegt, die hinsichtlich der vorbestimmten Richtung geneigt ist, so dass zumindest ein Abschnitt des bewegbaren Elementes (30) von der Seitenwand (161) weg bewegt wird, während sich das bewegbare Element (30) nicht mit dem Tintenzuführteil (120) überlagert, wenn sich die Oberfläche der Tinte in der vorbestimmten Richtung bewegt.

2. Tintenkartusche gemäß Anspruch 1, wobei das bewegbare Element (30) zumindest einen Vorsprung (33) aufweist, der mit der zumindest einen Führung (41) in einem Gleiteingriff ist.

3. Tintenkartusche gemäß Anspruch 1, wobei das bewegbare Element (30) viele Vorsprünge (33; 83; 1083) aufweist, die mit der zumindest einen Führung (61; 81; 1081) in einem Gleiteingriff sind.

4. Tintenkartusche gemäß einem der Ansprüche 1 bis 3, wobei sich die zumindest eine Führung (41; 61; 81) in einer Richtung erstreckt.

5. Tintenkartusche gemäß einem der Ansprüche 1 bis 3, wobei die zumindest eine Führung (1081) gekrümmt ist.

6. Tintenkartusche gemäß einem der Ansprüche 1 bis 5, wobei, wenn sich das bewegbare Element (30) von der ersten Position zu der zweiten Position bewegt, sich jeweils der Schwimmteil (31) und der Lichtblockierteil (32) in derselben Richtung bewegen.

7. Tintenkartusche gemäß einem der Ansprüche 1 bis 6, wobei, wenn sich das bewegbare Element (30) von der ersten Position zu der zweiten Position bewegt, jeder Abschnitt des bewegbaren Elementes (30) seine Position ändert.

8. Tintenkartusche (1) mit:
einer Tintenkammer (111), die eine erste Wand (161) mit einem ersten Ende und einem zweiten Ende aufweist, das dem ersten Ende entgegengesetzt ist, und einer zweiten Wand (160);
einem lichtdurchlässigen Abschnitt (140), der von der ersten Wand (161) vorsteht, wobei der lichtdurchlässige Abschnitt (140) einen inneren Hohlraum (140a) aufweist, der darin ausgebildet ist, und der innere Hohlraum (140a) so konfiguriert ist, dass er mit der Tintenkammer (111) in einer Fluidverbindung ist;
einem Tintenzuführteil (120) mit einer Öffnung (610a), die durch ihn hindurch ausgebildet ist, wobei der Tintenzuführteil (120) an der ersten Wand (161) angrenzend an dem zweiten Ende der ersten Wand (161) positioniert ist und der lichtdurchlässige Abschnitt (140) zwischen dem ersten Ende der ersten Wand (161) und dem Tintenzuführteil (120) positioniert ist;
einem bewegbaren Element (30) mit
einem Lichtblockierteil (32); und
einem Schwimmteil (31), der innerhalb der Tintenkammer (111) angeordnet ist;
wobei das bewegbare Element (30) so konfiguriert ist, dass es sich zwischen einer ersten Position und einer zweiten Position zumindest auf der Grundlage einer Tintenmenge bewegt, die innerhalb der Tintenkammer (111) vorhanden ist, wobei der Lichtblockierteil (32) innerhalb des inneren Hohlraums (140a) des lichtdurchlässigen Abschnitts (140) angeordnet ist, wenn das bewegbare Element (30) an der ersten Position positioniert ist, wobei, wenn die Tinte innerhalb der Tintenkammer (111) von dem Inneren der Tintenkammer (111) zu der Außenseite der Tintenkammer (111) abgegeben wird, sich eine Oberfläche der Tinte innerhalb der Tintenkammer (111) in einer vorbestimmten Richtung bewegt,
**dadurch gekennzeichnet, dass** entweder eine Nut (2042) oder ein Loch (3042) in oder durch das bewegbare Element (30) ausgebildet ist; und
zumindest ein Vorsprung (2033, 3033) von einem Inneren der zweiten Wand (160) vorsteht und entweder mit der Nut (2042) oder dem Loch (3042) in einem Gleiteingriff ist,
und wobei in einem Anbringungszustand der Tintenkartusche an einem Drucker die erste Wand (161) eine Seitenwand ist, wobei das erste Ende ein oberes Ende ist,
und wobei die Nut oder das Loch und der zumindest eine Vorsprung so aufgebaut und positioniert sind, dass, wenn sich das bewegbare Element (30) von der ersten Position zu der zweiten Position bewegt, der zumindest eine Vorsprung (2033, 3033) entweder innerhalb der Nut (2042) oder des Loches (3042) gleitet und sich das bewegbare Element (30) in einer Richtung bewegt, die hinsichtlich der vorbestimmten Richtung geneigt ist, so dass zumindest ein Abschnitt des bewegbaren Elementes (30) von der Seitenwand (161) weg bewegt wird, während sich das bewegbare Element (30) nicht mit dem Tintenzuführteil (120) überlagert, wenn sich die Oberfläche der Tinte in der vorbestimmten Richtung bewegt.

9. Tintenkartusche gemäß Anspruch 8, mit vielen Vorsprüngen (3033), die von dem Inneren der zweiten Wand (160) vorstehen.

10. Tintenkartusche gemäß Anspruch 9, wobei die vielen Vorsprünge (3033) an einer gekrümmten Linie angeordnet sind.

11. Tintenkartusche gemäß einem der Ansprüche 8 bis 10, wobei das Loch (3042) durch das bewegbare Element (30) ausgebildet ist, die Tintenkammer (111) des Weiteren eine dritte Wand (160) gegenüber der zweiten Wand (160) aufweist und der zumindest eine Vorsprung (3033) mit einem Inneren der dritten Wand (160) in Kontakt ist.

12. Tintenkartusche gemäß einem der Ansprüche 8 bis 11, wobei, wenn sich das bewegbare Element (30) von der ersten Position zu der zweiten Position bewegt, sich jeweils der Schwimmteil (31) und der Lichtblockierteil (32) in derselben Richtung bewegen.

13. Tintenkartusche gemäß einem der Ansprüche 8 bis 12, wobei, wenn sich das bewegbare Element (30) von der ersten Position zu der zweiten Position bewegt, jeder Abschnitt des bewegbaren Elementes (30) seine Position ändert.

## Revendications

1. Cartouche d'encre (1) comprenant :
une chambre d'encre (111) comprenant une paroi (161) ayant une première extrémité et une seconde extrémité opposée à la première extrémité ;
une partie translucide (140) faisant saillie de la paroi (161), dans laquelle la partie translucide (140) a une cavité interne (140a) formée à l'intérieur de celle-ci et la cavité interne (140a) est configurée pour être en communication de fluide avec la chambre d'encre (111) ;
une partie d'alimentation d'encre (120) ayant une ouverture (610a) formée à travers celle-ci, dans laquelle la partie d'alimentation d'encre (120) est positionnée au niveau de la paroi (161) adjacente à la seconde extrémité de la paroi, et la partie translucide (140) est positionnée entre la première extrémité de la paroi (161) et la partie d'alimentation d'encre (120) ;
un élément mobile (30) comprenant :
une partie de blocage de lumière (32) ; et
une partie de flotteur (31) disposée à l'intérieur de la chambre d'encre (111) ; et
dans lequel l'élément mobile (30) est configuré pour se déplacer entre une première position et une seconde position en fonction d'au moins une quantité d'encre disposée à l'intérieur de la chambre d'encre (111), dans laquelle la partie de blocage de lumière (32) est disposée à l'intérieur de la cavité interne (140a) de la partie translucide (140) lorsque l'élément mobile (30) est positionné dans la première position, dans laquelle lorsque l'encre à l'intérieur de la chambre d'encre (111) est distribuée de l'intérieur de la chambre d'encre (111) vers l'extérieur de la chambre d'encre (111), une surface de l'encre à l'intérieur de la chambre d'encre (111) se déplace dans une direction prédéterminée,
**caractérisée en ce que** la cartouche d'encre (1) comprend en outre :
au moins un guide (41 ; 61 ; 81 ; 1081), et
dans laquelle, dans un état d'installation de la cartouche d'encre dans une imprimante, la paroi (161) est une paroi latérale avec la première extrémité qui est une extrémité supérieure,
et dans laquelle le au moins un guide est construit et positionné de sorte que lorsque l'élément mobile (30) passe de la première position à la seconde position, au moins une partie de l'élément mobile (30) coulisse sur et le long du au moins un guide (41 ; 61 ; 81 ; 1081) et l'élément mobile (30) se déplace dans une direction qui est inclinée par rapport à la direction prédéterminée de sorte qu'au moins une partie de l'élément mobile (30) est éloignée de la paroi latérale (161) alors que l'élément mobile (30) n'interfère pas avec la partie d'alimentation d'encre (120) lorsque la surface d'encre se déplace dans la direction prédéterminée.

2. Cartouche d'encre selon la revendication 1, dans laquelle l'élément mobile (30) comprend au moins une saillie (33) qui met en prise de manière coulissante le au moins un guide (41).

3. Cartouche d'encre selon la revendication 1, dans laquelle l'élément mobile (30) comprend une pluralité de saillies (33 ; 83 ; 1083) qui met en prise de manière coulissante le au moins un guide (61 ; 81 ; 1081).

4. Cartouche d'encre selon l'une quelconque des revendications 1 à 3, dans laquelle le au moins un guide (41 ; 61 ; 81) s'étend dans une direction.

5. Cartouche d'encre selon l'une quelconque des revendications 1 à 3, dans laquelle le au moins un guide (1081) est incurvé.

6. Cartouche d'encre selon l'une quelconque des revendications 1 à 5, dans laquelle lorsque l'élément mobile (30) passe de la première position à la seconde position, chacune parmi la partie de flotteur (31) et la partie de blocage de lumière (32) se déplace dans une même direction.

7. Cartouche d'encre selon l'une quelconque des revendications 1 à 6, dans laquelle lorsque l'élément mobile (30) passe de la première position à la seconde position, chaque partie de l'élément mobile (30) change sa position.

8. Cartouche d'encre (1) comprenant :
une chambre d'encre (111) comprenant une première paroi (161) ayant une première extrémité et une seconde extrémité opposée à la première extrémité, et une seconde paroi (160) ;
une partie translucide (140) faisant saillie de la première paroi (161), dans laquelle la partie translucide (140) a une cavité interne (140a) formée à l'intérieur de celle-ci, et la cavité interne (140a) est configurée pour être en communication de fluide avec la chambre d'encre (111) ;
une partie d'alimentation d'encre (120) ayant une ouverture (610a) formée à travers celle-ci, dans laquelle la partie d'alimentation d'encre (120) est positionnée au niveau de la première paroi (161) adjacente à la seconde extrémité de la première paroi (161), et la partie translucide (140) est positionnée entre la première extrémité de la première paroi (161) et la partie d'alimentation d'encre (120) ;
un élément mobile (30) comprenant :
une partie de blocage de lumière (32) ; et
une partie de flotteur (31) disposée à l'intérieur de la chambre d'encre (111) ;
dans laquelle l'élément mobile (30) est configuré pour se déplacer entre une première position et une seconde position en fonction au moins d'une quantité d'encre disposée à l'intérieur de la chambre d'encre (111), dans laquelle la partie de blocage de lumière (32) est disposée à l'intérieur de la cavité interne (140a) de la partie translucide (140) lorsque l'élément mobile (30) est positionné dans la première position, dans laquelle, lorsque l'encre à l'intérieur de la chambre d'encre (111) est distribuée de l'intérieur de la chambre d'encre (111) vers l'extérieur de la chambre d'encre (111), une surface de l'encre à l'intérieur de la chambre d'encre (111) se déplace dans une direction prédéterminée,
**caractérisée en ce que** l'un parmi une rainure (2042) ou un trou (3042) est formé dans ou à travers l'élément mobile (30) ; et
au moins une saillie (2033, 3033) fait saillie d'un intérieur de la seconde paroi (160) et met en prise de manière coulissante l'un parmi la rainure (2042) ou le trou (3042),
et dans laquelle, dans un état d'installation de la cartouche d'encre dans une imprimante, la première paroi (161) est une paroi latérale avec la première extrémité qui est une extrémité supérieure,
et dans laquelle la rainure ou le trou et la au moins saillie sont construits et positionnés de sorte que lorsque l'élément mobile (30) passe de la première position à la seconde position, la au moins une saillie (2033, 3033) coulisse à l'intérieur de l'un parmi la rainure (2042) ou le trou (3042) et l'élément mobile (30) se déplace dans une direction qui est inclinée par rapport à la direction prédéterminée de sorte qu'au moins une partie de l'élément mobile (30) est éloignée de la paroi latérale (161) alors que l'élément mobile (30) n'interfère pas avec la partie d'alimentation d'encre (120) lorsque la surface de l'encre se délace dans la direction prédéterminée.

9. Cartouche d'encre selon la revendication 8, comprenant une pluralité de saillies (3033) faisant saillie de l'intérieur de la seconde paroi (160).

10. Cartouche d'encre selon la revendication 9, dans laquelle la pluralité de saillies (3033) est agencée sur une ligne incurvée.

11. Cartouche d'encre selon l'une quelconque des revendications 8 à 10, dans laquelle le trou (3042) est formé à travers l'élément mobile (30), la chambre d'encre (111) comprend en outre une troisième paroi (160) opposée à la seconde paroi (160), et la au moins une saillie (3033) est en contact avec un intérieur de la troisième paroi (160).

12. Cartouche d'encre selon l'une quelconque des revendications 8 à 11, dans laquelle lorsque l'élément mobile (30) passe de la première position à la seconde position, chacune parmi la partie de flotteur (31) et la partie de blocage de lumière (32) se déplace dans une même direction.

13. Cartouche d'encre selon l'une quelconque des revendications 8 à 12, dans laquelle lorsque l'élément mobile (30) passe de la première position à la seconde position, chaque partie de l'élément mobile (30) change sa position.
